# EUROPEAN PATENT APPLICATION

(11) **EP 0 821 208 A2**
(43) Date of publication of application: **28.01.1998**
(21) Application number: 97112433.4
(22) Date of filing: 21.07.1997
(51) Int. Cl.: F24H 1/28, F28D 21/00, F28D 1/03

(54) **Unit for exchanging heat between hot waste gases or flue gases and water**

(30) Priority: 26.07.1996 IT VR960034 U
(71) Applicant: Montini, Renato, 37010 Costermano (Verona) (IT)
(72) Inventor: Montini, Renato, 37010 Costermano (Verona) (IT)
(74) Representative: Modiano, Guido, Dr.-Ing.

(57) **Abstract**

A unit for exchanging heat between hot waste gases or flue gases and water, which comprises a water container (2) and a tube nest (3) which can be submersed in the water contained in the container (2); the tube nest (3) has a plurality of tube portions (4) and at least one lower end plate (5) and an upper end plate (6) for supporting and securing the tubes, which have a plurality of corresponding through openings, each of which is suitable for receiving an end of a respective tube portion (4), a lower header (11) and an upper header (12), each delimited by an end of the container (2) and a respective end plate (5,6) inside it, to distribute the hot waste gases or flue gases among at least part of the tubes (4) of the tube nest (3) and discharge them through a stack or vent.

## Description

The present invention relates to a unit for exchanging heat between hot waste gases or flue gases and water which is particularly suitable for heating systems or for systems for producing sanitary water.

The aim of the present invention is to provide a new improved heat exchanging unit or heat exchanger which is very simple in structure and of high efficiency in terms of heat transfer to water to be heated.

Another object of the present invention is to provide a heat exchanger suitable for recovering heat from hot waste gases or flue gases coming from either an external source or a burner.

Another object of the present invention is to provide a heat exchanger which can be manufactured at competitive costs.

These and other objects which will become apparent hereinafter are achieved by a unit for exchanging heat between hot waste gases or flue gases and water, according to the invention, which comprises a water container and a tube nest which can be submersed in the water in the said container. The said tube nest has a plurality of tube portions and at least one lower end plate and one upper end plate for supporting and securing the tubes, which have a plurality of corresponding through openings, each of which is suitable for receiving an end of a respective tube portion, and a lower header and an upper header, each delimited by an end of said container and a respective end plate inside it, to distribute the hot waste gases or flue gases among at least part of the tubes of the tube nest and towards a stack or vent.

Advantageously, the said tube portions are obtained from flattened welded pipe which has two main opposite surfaces formed with recesses in order to delimit an uneven inner space for the hot waste gases or flue gases.

Further characteristics and advantages of the present invention will become apparent from the following detailed description of an emodiment thereof, illustrated only by way of non-limitative example in the accompanying drawings, wherein:
Figure 1 is a front elevation view of a heat exchanger according to the invention, half of which is shown in axial longitudinal cross-section;
Figures 2 and 3 are each a plan view of the lower end plate and of the upper end plate, respectively, of the heat exchanger of Figure 1;
Figure 4 is a front elevation view, half of which is shown in axial longitudinal cross-section, of a heat exchanger according to the invention, which cooperates with a built-in burner and acts as a boiler unit;
Figures 5, 6 and 7 are plan views of a lower end plate, of an intermediate plate, and of an upper end plate, respectively, for the tube nest of the heat exchanger in Figure 4;
Figure 8 is a front view of a flattened tube which can be used in the tube nest of a heat exchanger according to the invention;
Figure 9 is a sectional view, taken along the section line IX-IX of Figure 8; and
Figure 10 is a sectional view, taken along the section line X-X of Figure 9.

In the accompanying drawings, the same or similar parts or components have been designated by the same reference numerals.

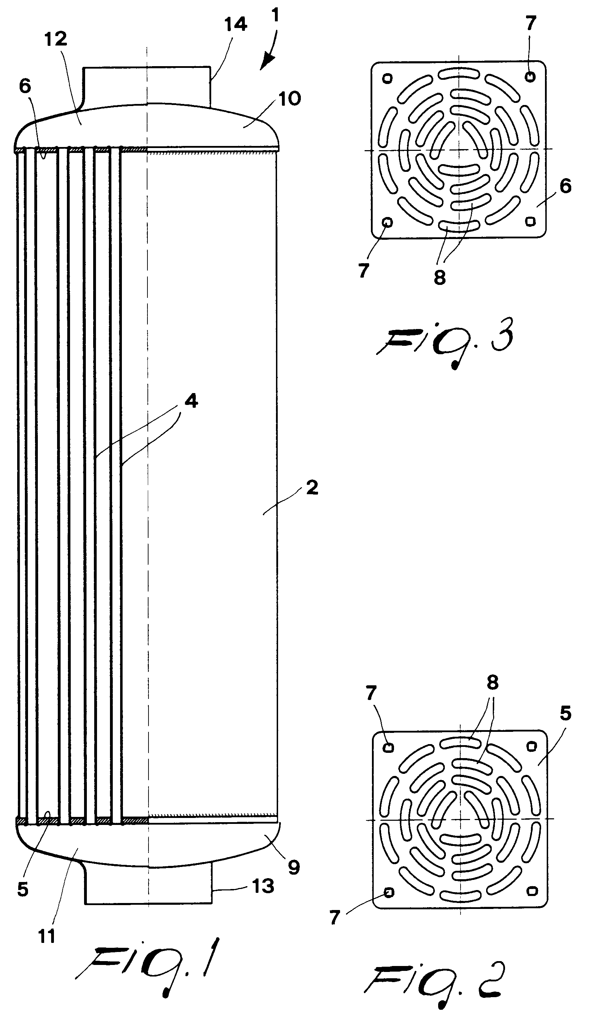

With reference first to Figures 1 to 3 of the drawings, it will be noted that a unit 1 for exchanging heat between hot waste gases or flue gases arriving from a suitable source (not shown) and water, is constituted by a water container, e.g. a tank 2 cylindrical in cross-section enclosing a tube nest 3 which can be submersed in the water contained in the tank 2. The tube nest is formed by a plurality of tube portions or sections 4, a lower end plate 5 and an upper end plate 6, on which the tube portions 5 are supported and fixed.

The end plates 5 and 6 shown in the drawings are square in plan view, are dimensionally and structurally identical to each other and constitute the bottom and the top, respectively, of the tank 2, to which they are sealed, e.g., welded. The same plates can be sealingly fixed within a sorrounding jacket, which can be thermally insulated in any suitable manner; e.g., they can be anchored to four angular L-shaped bars, not shown in the drawings, by means of screws passing through respective holes or slots 7 formed in the end plates.

Each end plate is also formed with a plurality of through openings 8, the number of which is equal to the number of the tube portions 4. Each through opening is designed to constitute a seat for sealingly supporting an end of a respective tube portion 4, and are shaped to match the external shape of it, e.g., a slightly arc-like shape, as shown in Figures 2 and 3. It will be noted that the openings 8 are preferably arranged in concentric rows around the axis of the tank 2.

At each end of the tank 2 a respective dome or cap 9 and 10 is provided, which together with the end plate adjacent to it delimits an internal space which acts as lower header 11 and an upper space 12 for the hot waste gases or flue gases, which are fed, in use, to the lower header 11 by a feed duct 13, rise along the tube portions 4 of the tube nest, along which they transfer most of their heat to the submersion water in the tank 2 and then flow to the upper header 12 before being discharged to a stack or vent along an exhaust duct 14.

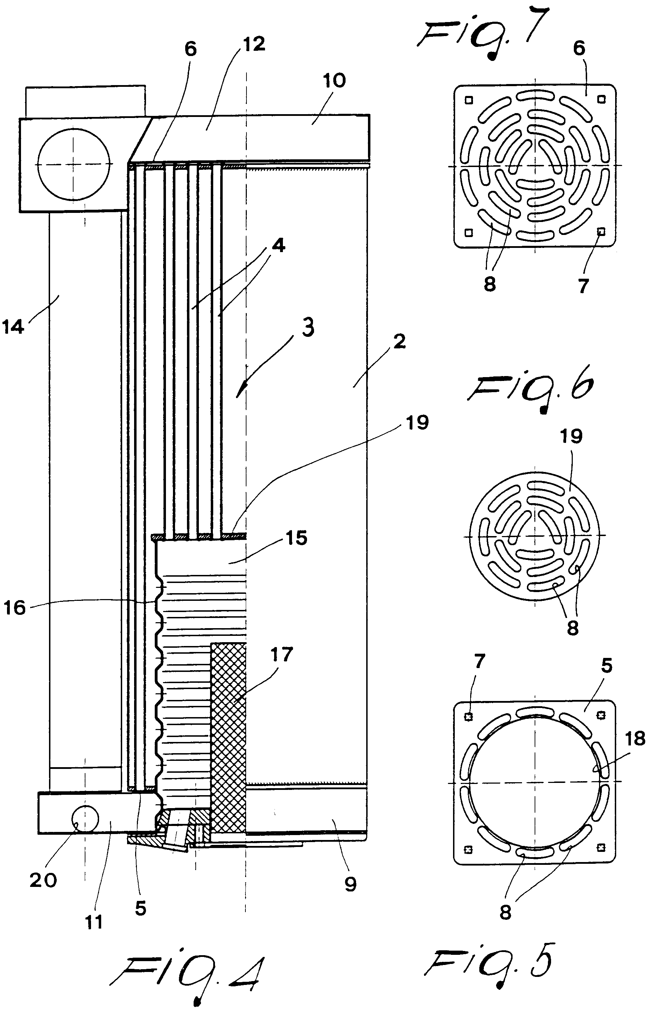

In the embodiment illustrated in Figures 4 to 7, a furnace space 15 is formed in the lower part of the heat exchanger and is delimited by a tubular body 16 which has a corrugated side wall and is arranged to accommodate a nozzle 17 of a burner of any suitable kind, not shown in the drawings. The tubular body 16 is supported by the lower plate 5, which in this embodiment has a relatively large axial hole 18 inside which the tubular body 16 is sealed.

The top of the furnace space 15 is formed by an intermediate plate 19 which has the same configuration as the central portion of the upper plate 6 for a submersed tube nest formed by tube portions 4 extending between the intermediate plate 19 and the upper plate 6. The outer circular row of tube portions 4 sealingly connected to the upper plate 6 extends from the end plate to the lower plate 5 in order to form a path for the return or descent of the hot flue gases or waste gases collected in the upper header 12.

In this embodiment, the lower header 13 is annular in shape and is arranged around the lower end of the tubular body 16 so as to act as a header for collecting the condensate before the now relatively cold waste gases or flue gases being fed into the removal duct 14 connected to a stack or vent.

In this embodiment, the hot waste gases or flue gases discharged from the nozzle 17 rise along the short tubular portions 4 which lead into the intermediate plate 19 and transfer heat to the surrounding water, then they flow to the upper header 12 and descend along the relatively long peripheral tubular portions which extend from the upper plate 6 to the lower plate 5, and enter the lower annular header 11, where a water discharge trap 20 is provided, before entering the removal duct 14.

The tanks 2 are of course provided with a lower inlet for relatively cold water and with an upper outlet for heated immersion water, said inlet and said outlet being not shown in the drawings for clarity purposes.

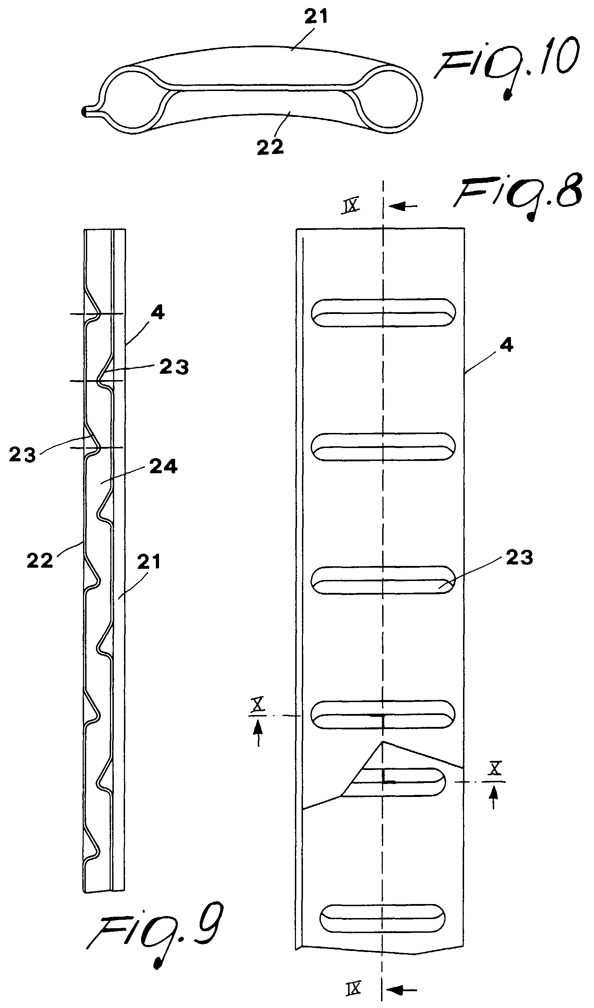

As shown in Figures 8 to 10, the tube portions 4 which constitute the submersed tube nest are obtained from longitudinally beaded and welded flattened tube which has two opposite main surfaces 21 and 22, each of which is formed with a sequence of recesses 23 which contribute in increasing the heat exchange surface and, as clearly shown in Figures 8 and 9, are staggered so as to delimit an uneven or zigzag inner space 24 for the ascending and descending flow to hot waste gases or flue gases. Accordingly, hot waste gases or flue gases flowing within the tubular portions 4 are affected by whirling motion which is advantageous for obtaining an efficient heat exchange between the gases and the wall of each tube 4 and between the tube 4 and the immersion water.

The walls 21 and 22 are furthermore slightly curved around the same center, as shown in Figure 10, so as to better adapt themselves to an arrangement along concentric circular rows on the plates 5, 6 and 19.

The tubes 4 are preferably obtained by cold stamping, profiling, beading and welding from stainless steel sheet.

The above described structure of the heat exchanger is highly effective in exchanging heat between gases and water, is relatively simple to manufacture, is lightweight and longlasting, since it is resistant to chemical aggression by water and the compounds and ions contained therein.

The heat exchanger described above is susceptible of numerous modifications and variations within the scope of the protection defined by appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Heat exchanger for exchanging heat between hot waste gases or flue gases and water, which comprises a water container and a tube nest which can be submersed in the water in the said container and is characterized in that the said tube nest (3) has a plurality of tube portions (4) and at least one lower end plate (5) and one upper end plate (6) for supporting and securing the tubes, which have a plurality of corresponding through openings (8), each of which is suitable for receiving an end of a respective tube portion (4), and a lower header (11) and an upper header (12), each delimited by an end of said container (2) and a respective end plate (5,6) inside it, to distribute the hot waste gases or flue gases among at least part of the tubes (4) of the tube nest (3) and discharge them through a stack or vent.

2. Heat exchanger according to claim 1, characterized in that it comprises, at one end of said container (2), a furnace space (15) which is delimited by a tubular body (16) arranged to accommodate a burner nozzle (17), the said tubular body (16) being supported and sealingly fixed in a hole (18) formed in said lower plate (5) and having a top which comprises an intermediate plate (19) having the same configuration as the central portion of said upper plate (6) to support a tube nest (3) which can be submersed in said container (2) and extends between the intermediate (19) and the upper plate (6).

3. Heat exchanger according to claim 2, characterized in that at least one peripheral row of tube portions (4) sealingly connected to the said upper plate (6) extends from said upper end plate (6) to said lower end plate (5) in order to delimit a plurality of paths for the return or descent of hot flue gases or waste gases collected in said upper header (12).

4. Heat exchanger according to claim 2 or 3, characterized in that the said lower header (13) is annular in shaped and arranged around the lower end of the tubular body (4) in order to act as water trap (20).

5. Heat exchanger according to any one of the preceding claims, characterized in that said tube portions (4) are obtained from a pipe which is longitudinally beaded and welded and has two opposite main surfaces formed with recesses (23) in order to delimit an uneven inner space for the hot waste gases or flue gases.

6. Heat exchanger according to claim 5, characterized in that the main walls (21,22) of each one of said tube portions (4) are curved around a same center.
